(19) **Europäisches Patentamt**
**European Patent Office**
**Office européen des brevets**

(11) **EP 1 089 883 B1**

(12) **EUROPÄISCHE PATENTSCHRIFT**

(45) Veröffentlichungstag und Bekanntmachung des Hinweises auf die Patenterteilung:
**27.11.2002  Patentblatt 2002/48**

(51) Int Cl.⁷: $B42D\ 15/10$, $G02B\ 27/60$

(21) Anmeldenummer: **99923362.0**

(86) Internationale Anmeldenummer:
**PCT/CH99/00251**

(22) Anmeldetag: **09.06.1999**

(87) Internationale Veröffentlichungsnummer:
**WO 00/000356 (06.01.2000 Gazette 2000/01)**

(54) **GEGENSTAND MIT OPTISCHEM EFFEKT**

OBJECT WITH AN OPTICAL EFFECT

OBJET AVEC EFFET OPTIQUE

(84) Benannte Vertragsstaaten:
**CH DE ES FR GB IT LI**

(30) Priorität: **26.06.1998  EP 98810590**

(43) Veröffentlichungstag der Anmeldung:
**11.04.2001  Patentblatt 2001/15**

(73) Patentinhaber: **Alcan Technology & Management AG**
**8212 Neuhausen am Rheinfall (CH)**

(72) Erfinder:
- **ZEITER, Patrik**
  **CH-8044 Zürich (CH)**
- **LÜTHI, Markus**
  **CH-8460 Marthalen (CH)**
- **LOHWASSER, Wolfgang**
  **D-78262 Gailingen (DE)**

(56) Entgegenhaltungen:
**EP-A- 0 778 159**          **US-A- 4 519 155**
**US-A- 4 632 430**          **US-A- 4 662 653**

**Beschreibung**

Die Erfindung betrifft einen Gegenstand mit einem zur Erhöhung der Fälschungssicherheit einen optischen Effekt erzeugenden Oberflächenbereich. Im Rahmen der Erfindung liegen auch Verfahren zur Herstellung des Gegenstandes sowie seine Verwendung.

Die Fälschungssicherheit von Verpackungen ist vor allem für die Pharmaindustrie von grosser Bedeutung. Grundsätzlich besteht jedoch auch in anderen Bereichen der Wunsch nach fälschungssicheren Verpackungen oder Produkten, insbesondere in der Konsumgüterindustrie, beispielsweise bei der Verpackung von Lebensmitteln, kosmetischen Artikeln, Kleidern, Software- und Musik CD's oder Wertpapieren. Der Gegenstand mit dem den optischen Effekt erzeugenden Oberflächenbereich kann eine Verpackung, ein Packstoff, ein Packhilfsmittel oder ein Produkt selbst sein, auf dem ein Oberflächenbereich in Form eines Sicherheitsteils, beispielsweise als Etikette, mit einem optischen Effekt ausgestattet ist.

Eine fälschungssichere Verpackung oder ein Packhilfsmittel kann als Originalitätsgarantie dienen, die es dem Kunden ermöglicht zu erkennen, dass das von ihm erworbene Produkt tatsächlich vom gewünschten Produzenten hergestellt und verpackt worden ist. Ein fälschungssicheres Packhilfsmittel kann u.a. auch als Erstöffnungsgarantie eingesetzt werden, beispielsweise in Form einer Etikette, einer Banderole oder eines Siegelstreifens usw., die z.B. über einem Flaschenverschluss oder über dem Verschluss eines Weithalsglases, über der Naht zwischen einem Deckel und einem Behälter oder über dem Aufreissverschluss eines Beutels festgelegt worden sind. Beim Öffnen der entsprechenden Verpackung wird die Etikette, die Banderole oder der Siegelstreifen zerstört und damit angezeigt, dass eine Erstöffnung bereits erfolgt ist. Es ist auch möglich, Gegenstände in eine Umverpackung zu füllen oder einzuhüllen, wobei die Umverpackung charakteristische unverwechselbare und nicht kopierbare Merkmale aufweist, welche zeigen, dass das Verpacken des Inhalts bei einem bestimmten Lieferanten erfolgt ist.

Bekannte fälschungssichere Verpackungen und Produkte sind auf ihrer Oberfläche mit Hologrammen versehen oder weisen Farbcodierungen oder unsichtbare Merkmale auf. Zur Erzielung einer hohen Fälschungssicherheit haben sich in der Praxis u.a. Hologramme bewährt. Beispiele sind Hologrammetiketten oder Deckelfolien mit integrierten Hologrammen. Die Erzeugung von Hologrammen ist jedoch mit einem enormen Aufwand verbunden.

Die US-A-4662653 offenbart einen Gegenstand mit einem Oberflächenbereich, der eine durchsichtige Materialschicht mit einem Bildmuster aufweist, die einseitig an eine spiegelnde Schicht grenzt. Das Spiegelbild des Bildmusters bildet ein zweites Bildmuster, wobei der Abstand zwischen diesen Bildmustern durch die Dicke der Materialschicht bestimmt ist. Bei einer Änderung des Betrachtungswinkels kommt es zu einer Veränderung in der optischen Wahrnehmung des durch die Überlagerung der Bildmuster erzeugten Gesamtbildes. Die Abstände zwischen den einzelnen Bildelementen bzw. zwischen Bildmuster und Reflexionsschicht sind so bemessen, dass die optische Erscheinung auf einer Lichtdiffraktion beruht.

Auch die US-A-4632430 offenbart Gegenstände mit einem einen optischen Effekt erzeugenden Oberflächenbereich, wobei zwei Bildmuster durch eine durchsichtige Materialschicht in Abstand gehalten werden und sich bei Änderung des Betrachtungswinkels die optische Wahrnehmung des durch die Überlagerung der Bildmuster erzeugten Gesamtbildes ändert. Dieser Effekt, der sich nur bei durchscheinendem Licht ergibt, beruht auf einer einfachen Überlagerung der Schattenbereiche der beiden Bildmuster.

Ein aus der EP-A-0348583 bekannter Gegenstand beinhaltet eine Basisfläche mit einem Linienmuster. Eine durchsichtige Folie ist mit einem zweiten Linienmuster versehen. Die durchsichtige Folie mit dem zweiten Linienmuster wird partiell an der Basisfläche befestigt, so dass sich bei Bewegung des Gegenstandes der Abstand zwischen der Basisfläche und der durchsichtigen Folie unterschiedlich stark verändert. Unter bestimmten Abstandsbedingungen ergeben sich für den Betrachter eine Art "dynamische" Moiré-Muster.

In der WO-A-97/19820 ist ein Gegenstand offenbart, der an seiner Oberfläche einen optischen Effekt zeigt, der sich aus der Anordnung von zwei durch eine durchsichtige Materialschicht getrennten Bildmustern ergibt. Die an einem mikroskopischen Rasterbild durch Lichtdiffraktion entstehenden Beugungsmuster führen durch Überlagerung zu Moiré-Interferenzen.

Aus der WO-A-98/15418 ist ein Wertpapier bekannt, das in gefalteter Form einen Oberflächenbereich mit einem optischen Effekt aufweist, der auf Moiré-Interferenzen zurückzuführen ist. Die beiden Bildmuster sind je auf einer transparenten Folie aufgebracht, wobei die beiden Bildmuster keinen festen Abstand zueinander aufweisen, sonder das eine Bildmuster vom andern losgelöst angeordnet ist. Der optische Effekt tritt deshalb erst beim Aufeinanderlegen der beiden Bildmuster während des Faltens des Papiers in Erscheinung.

Aus der DE-A-3120653 sind sogenannte Moiré-Dehnungsmessstreifen bekannt. Die beiden Bildmuster (Rasterfolien) sind nicht in festem Abstand zueinander gehalten, sondern voneinander losgelöst angeordnet.

Der Erfindung liegt die Aufgabe zugrunde, zumindest ein Teil der Oberfläche von Gegenständen wie Verpackungen, Packstoffe, Packhilfsmittel oder Produkte selbst mit einem optischen Effekt auszustatten, der auf kostengünstige Weise hergestellt, jedoch nicht auf einfache Art gefälscht werden kann.

Zur erfindungsgemässen Lösung der Aufgabe führt ein Gegenstand mit den Merkmalen von Anspruch 1.

Die Erfindung macht von einem, unter dem Begriff Moiré-Effekt bekannten Phänomen Gebrauch. Moiré-Muster sind zweidimensionale Abbildungen, die sich durch Interferenz von zwei sich überlagernden Rastern ergeben. Durch Verschiebung von zwei unmittelbar aufeinanderliegenden Rastern wechselt auch die Moiré-Interferenz, was zu den bekannten wechselnden Hell-Dunkel-Erscheinungen führt.

Die vorliegende Erfindung macht sich das Wechseln der Moiré-Interferenz ohne mechanische Verschiebung der Raster zunutze. Durch den gegenseitigen Abstand der Bildmuster entsteht eine räumliche Anordnung, die bei Änderung des Betrachtungswinkels zu wechselnden Moiré-Interferenzen führt. Bei Verwendung von reflektierenden Materialien kann im Bereich des Reflexionswinkels anstelle von Moiré-Interferenzen ein Reflexionsbild eines der Bildmuster beobachtet werden, während sich ausserhalb des Reflexionswinkelbereichs eine Moiré-Interferenz auftritt. Der wesentliche Kern der Erfindung liegt somit in der Bereitstellung eines dreidimensionalen Moiré-Musters.

Um den erfindungsgemässen Effekt zu erzeugen, sind die bereits von den Moiré-Mustern her bekannten Distanzen zwischen benachbarten Bildelementen einzuhalten. Die Bildmuster können aus einzelnen parallelen Linien oder auch punktförmig aufgebaut sein. Im einfachsten Fall eines Linienmusters ist die Distanz zwischen benachbarten Linien immer gleich. Bei einer einfachen Anordnung sind zwei identische Bildmuster deckungsgleich in Abstand zueinander angeordnet. Es ist jedoch auch möglich, Bereiche eines Bildmusters gegenüber dem anderen Bildmuster beispielsweise um die halbe Distanz zwischen benachbarten Bildelementen zu verschieben oder mit einem anderen Bildmuster zu versehen, so dass sich bei Änderung des Betrachtungswinkels beispielsweise ein mehrfacher Hell-Dunkel-Wechsel ergibt. Selbstverständlich können Bildmuster auch eine Kombination von geraden und gekrümmten Linien oder anderen Bildelementen enthalten. Auf diese Weise ist es beispielsweise möglich, Markennamen und dgl. Zeichen mit dreidimensionalem Moiré-Effekt in den Packstoff einzubauen. Zur weiteren Erhöhung der Fälschungssicherheit kann beispielsweise eines der Bildmuster neben einem Linienraster noch eine zusätzliche Struktur enthalten. Eine andere Art zur Erhöhung der Fälschungssicherheit sowie zur versteckten Anordnung von Daten liegt darin, dass die zusätzlichen Informationen durch entsprechende Gestaltung der Bildmuster erst nach dem Auflegen eines zusätzlichen Filters möglich sind. Derartige Filter bestehen aus einem Gittermuster, dessen Gitterdimensionen auf die Rasterdimensionen abgestimmt sind.

Die durchsichtige Materialschicht, die als Abstandshalter für die Bildmuster wirkt, dient der Einstellung des gewünschten festen Abstandes. Dieser ist unveränderlich, da die Muster unmittelbar mit dauernder Haftung auf verschiedenen Seiten oder Ebenen der durchsichtigen Materialschicht angeordnet sind.

Die durchsichtige Materialschicht kann beidseitig mit einem Bildmuster versehen sein. Eine andere Variante besteht darin, dass die durchsichtige Materialschicht aus mindestens zwei Teilschichten aufgebaut ist und die Bildmuster auf unterschiedlichen Teilschichten aufgebracht sind. Bei einer weiteren Variante ist eines der Bildmuster auf einer undurchsichtigen Folie, beispielsweise auf einer Aluminiumfolie, aufgebracht.

Anstelle von zwei aufgebrachten Bildmustern kann eines der Bildmuster das Spiegelbild des anderen Bildmusters sein. In diesem Fall grenzt die durchsichtige Materialschicht einseitig an eine spiegelnde Schicht, beispielsweise eine Aluminiumfolie mit Hochglanzoberfläche.

Die Bildmuster können in der Form von Farbendruckmustern aufgebracht sein. Hierbei können die Druckmuster monochrom oder mehrfarbig sein. Als zusätzliche Sicherheit können Farben eingesetzt werden, die den Moiré-Effekt erst im UV- oder IR-Licht erkennbar machen. Eine andere Möglichkeit besteht darin, dass zumindest ein Bildmuster in der Form einer Oberflächenstruktur mit höhenversetzten Strukturteilen ausgestaltet ist, z.B. als Präge- oder Ätzmuster. Präge- oder Ätzmuster sind beispielsweise zum Aufbringen eines Bildmusters, auf einer Aluminiumfolie geeignet. Prägemuster können auch auf Kunststoff- bzw. Aluminium/Kunststoff-Laminatfolien durch Heiss- undloder Kaltprägen aufgebracht werden. Folien bzw. Folienlaminate mit einem Bildmuster in Form einer Oberflächenstruktur eignen sich in besonderem Masse zur Herstellung von Tubenlaminaten zur Herstellung von beispielsweise Zahnpastatuben.

Die Bildmuster können auch als Mikroperforationen auf einer undurchsichtigen Folie, insbesondere auf einer Aluminiumfolie, aufgebracht sein. Hierbei beträgt der Durchmesser bzw. die Breite der Perforationen etwa 10 bis 1000 µm, bevorzugt 50 bis 200 µm.

Die Bildmuster können auch Grundmatrizes mit einzelnen Bildelementen umfassen, wobei einander zugehörige Bildelemente verschiedener Grundmatrizes zur Erzeugung lokal unterschiedlicher Hell-Dunkel-Kontraste bzw. Farben versetzt gegeneinander angeordnet sind. Bevorzugt bilden die Bildelemente Muster, die durch verschiedene Kombinationen von Überlagerungen definierte Hell-Dunkel-Kontraste bzw. Farben ergeben. Da diese Art Bildmuster zur Erzielung einer guten Bildwirkung eine extrem hohe Passgenauigkeit der übereinander liegenden Grundmatrizes erfordern, eignet sich diese Art von Bildmustern vor allem für Anwendungen, bei denen eine hohe Fälschungssicherheit gefordert wird.

Die Herstellung des erfindungsgemässen Gegenstandes erfolgt nach bekannten Verfahren. Das Aufbringen der Bildmuster kann beispielsweise durch gleichzeitiges Bedrucken der beiden Seiten einer durchsichtigen Kunststofffolie erfolgen. Die einzelnen Bildmuster können aber auch auf unterschiedliche Folien aufgedruckt werden. Die einzelnen, mit jeweils einem Bildmuster bedruckten Folien werden anschliessend durch Kaschierung zum Packstoff zusammengefügt. Die Fälschungssicherheit wird dadurch noch erhöht, dass die Kaschierung auf einer Maschine mit hochpräzisen Druckmarkensteuerungen erfolgen muss.

Der erfindungsgemässe Gegenstand kann beispielsweise ein beliebiges Verpackungsmaterial in der Form eines Packstoffes oder Packhilfsmittels sein, welches eine durchsichtige Materialschicht aufweist, wobei zusätzlich erfindungsgemäss Bildmuster aufgebracht sind. Der Packstoff kann starr, halbstarr oder flexibel sein und kann ein Formkörper oder insbesondere ein folienförmiges Material darstellen. Beispiele für Formkörper sind geblasene, tief- und/oder streckgezogene oder getiefte Formkörper, wie Flaschen, Weithalsgefässe, Becher, Schalen oder Bodenteile von Durchdrückpackungen oder Blisterpackungen. Beispiele für folienförmige Materialien sind Metallfolien, wie Aluminium-, Stahl-, Kupfer-, Silber- oder Goldfolien. Weitere Beispiele für folienförmige Materialien sind Papiere, wie Seidenpapier mit einem Flächengewicht von 20 bis 30g/m$^2$ oder Hochweisspapier mit einem Flächengewicht von 40 bis 60g/m$^2$, Karton, Halbkarton oder dgl. Bedeutsam sind insbesondere kunststoffhaltige Folien, z.B. auf der Basis von Polyolefinen, wie Polyethylenen oder Polypropylenen, Polyamiden, Polyvinylchlorid, Polyestern, wie Polyalkylenterephthalaten und insbesondere Polyethylenterephthalat, Die kunststoffhaltigen Folien können Monofolien aus Kunststoffen, Laminate aus zwei oder mehreren Kunststofffolien, Laminate aus Metall- und Kunststofffolien, Laminate aus Papieren und Kunststofffolien oder Laminate aus Papieren und Metall- und Kunststofffolien sein. Die einzelnen Kunststofffolien können eine Dicken von beispielsweise 12 bis 200µm und die Metallfolien von 12 bis 100 µm aufweisen. Die einzelnen Schichten der folienförmigen Materialien können mittels Klebstoffen, Kaschierklebern, Haftvermittlern und/oder durch Extrusionsbeschichten, Coextrusion oder Kaschieren usw. aneinander festgelegt werden. Als Kunststofffolien bevorzugt sind nicht orientierte oder axial oder biaxial orientierte Monofolien oder Laminate aus zwei oder mehreren nicht orientierten oder axial oder biaxial orientierten Folien aus kunststoffen auf der Basis von Polyolefinen, wie Polyethylenen oder Polypropylenen, Polyamiden Polyvinylchlorid, Polyestern, wie Polyalkylenterephthalaten und insbesondere Polyethylenterephthalat.

Die vorstehend erwähnten Verpackungsmaterialien können die erfindungsgemässen Gegenstände in der Form von Packstoffen oder Packhilfsmitteln bilden. Beispielsweise können aus folienförmigen Packstoffen durch Ausstanzen und Siegeln Beutel, Sachets, Einwickler, Taschen usw. hergestellt werden. Folien können durch Tief- und/oder Streckziehen zu Formpakkungen oder Formkörpern, wie Bodenteilen von Durchdrück- oder Blisterpackungen oder zu Weithalsgefässen, Menuschalen, Gobelets, Bechern usw. verformt werden. Es können aus den Folien z.B. Tuben (Laminattuben) oder Deckel für Formpakkungen hergestellt werden. Aus beispielsweise kartonhaltigen Substraten können Schachteln, wie Faltschachteln, hergestellt werden. Es ist auch möglich, z.B. Flaschen, aus Kunststoffen geblasen, oder vorgeformte Formpackungen als Substrate zu verwenden und die erfindungsgemässe durchsichtige Materialschicht darauf anzubringen. Verschlüsse, Öffnungen, Nähte, Nähte zwischen einem Bodenteil und dem dazugehörigen Deckel usw. können mit einem erfindungsgemässen Packhilfsmittel in Form einer Etikette, eines Siegelstreifens, einer Banderole, eines Garantiesiegels oder einer Überschliessung versehen werden. Diese letztgenannten Packhilfsmittel liegen in der Regel folienförmig vor und werden auf dem entsprechenden Behälter über der Öffnung und am angrenzenden Behälterteil fixiert, wie beispielsweise festgeklebt, angeschweisst, aufgebordelt oder aufgeschrumpft usw. Das Packhilfsmittel weist die erfindungsgemässe durchsichtige Materialschicht und die durch diese in Abstand gehaltenen Bildmuster auf. Der erfindungsgemässe Aufbau der Oberfläche bzw. eines Oberflächenbereichs des Gegenstandes führt zu der gezielt angestrebten optischen Erscheinung bei Änderung des Betrachtungswinkels. Eine Fälschung durch Fotokopieren und Verwendung der Fotokopie als Originalitäts- oder Herstellergarantie wäre sofort und leicht erkennbar, da eine Änderung des Betrachtungswinkels den bei erfindungsgemässem Aufbau auftretenden optischen Effekt nicht zeigt. Damit Packhilfsmittel, beispielsweise Siegelstreifen oder Banderolen, vom Verbraucher leicht gebrochen werden können, kann es zweckmässig sein, Anreisshilfen wie Schwächungen, Kerben oder Abreisszungen vorzusehen. Es können als Bestandteil von Packstoffen oder Packhilfsmitteln auch leicht einreissbare oder durchstossbare Folien, wie mit Füllstoffen angereicherte Kunststofffolien oder aus zwei schlecht verträglichen Kunststofffolien hergestellte Folien angewendet werden.

Neben der bereits erwähnten Verwendung des erfindungsgemässen Gegenstandes in der Form einer Verpackung, eines Packstoffes oder eines Packhilfsmittels ist ein weiteres Anwendungsgebiet die fälschungssichere Herstellung von Wertpapieren, Eintrittskarten und dergleichen Dokumenten, wobei neben der fälschungssicheren Ausgestaltung auch dekorative Spezialeffekte erzeugt werden können.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in

- Fig. 1      das Prinzip der dreidimensionalen Moiré-Interferenz, gezeigt am Schnitt durch eine erfindungsgemässe Anordnung von Bildmustern;

- Fig. 2 bis 7    Schnitte durch Beispiele von Folien mit erfindungsgemäss angeordneten Bildmustern;

- Fig. 8   eine Draufsicht auf zwei übereinander liegende Bildmuster mit versetzt gegeneinander angeordneten Bildelementen.

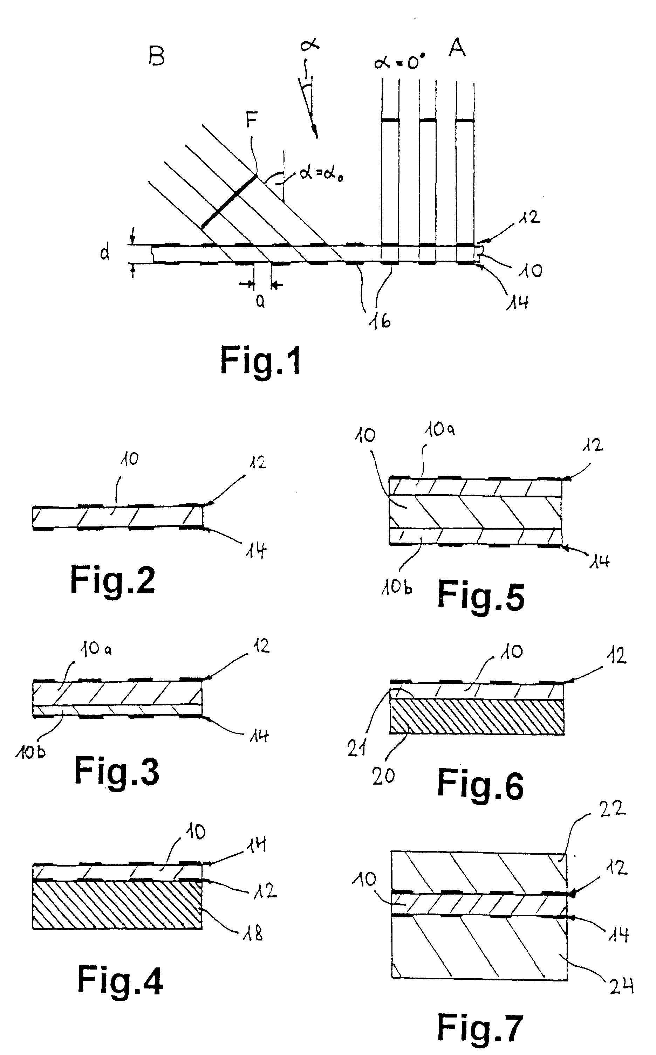

Fig.1 zeigt eine durchsichtige Materialschicht 10 mit beidseits in Abstand d angeordneten Bildmustern 12, 14 in der Form von aus einzelnen Linien 16 aufgebauten Rastern. Die Distanz a zwischen den einzelnen Rasterlinien 16 ist im vorliegenden Beispiel immer gleich und entspricht der Auflösung. Aus der Zeichnung ist ohne weiteres verständlich, dass der Beobachter unter dem Betrachtungswinkel $\alpha = 0°$ (A) das Bild im Original sieht. Unter einem bestimmten Betrachtungswinkel $\alpha_0$ (B) ergibt sich für den Beobachter eine schwarze Fläche F. Für einen Betrachtungswinkel $\alpha$ zwischen $\alpha_0$ und $0°$ zeigt sich für den Beobachter ein Bild mit progressiv zu- bzw. abnehmender Breite der einzelnen Rasterlinien 16. Für den dreidimensionalen Moiré-Effekt ist der Grenzwinkel $\alpha_o$ entscheidend; ist er zu gross, so sind für eine Beobachtung der wechselnden Moiré-Interferenzen grosse Winkeländerungen erforderlich, d.h. der Effekt ist nur schwach erkennbar. Der optimale Wert für den Grenzwinkel $\alpha_0$ liegt beispielsweise bei $20°$. Der Grenzwinkel $\alpha_o$ ist direkt vom Abstand d der beiden Bildmuster 12, 14 sowie von der Auflösung a abhängig, wobei folgende mathematische Beziehung gilt:

$$a = d \cdot tg\ \alpha_o.$$

Da die für die durchsichtige Materialschicht 10 üblicherweise eingesetzten Kunststofffolien bzw.- filme Dicken zwischen etwa 7μm und 200 μm aufweisen, ergibt sich eine sehr feine und daher fälschungssichere Auflösung a. Aufgrund der mathematischen Beziehung zwischen dem Abstand d der beiden Bildmuster 12, 14 bzw. der Dicke der durchsichtigen Materialschicht 10 und der Distanz a zwischen den einzelnen Rasterlinien 16 kann die optimale Auflösung für einen gegebenen Schichtaufbau auf einfache Weise ermittelt werden.

Die Fig. 2 bis 7 zeigen Beispiele von Bildmusteranordnungen.

Gemäss Fig. 2 ist eine durchsichtige Kunststofffolie 10 beidseitig mit den Bildmustern 12, 14 bedruckt.

Fig. 3 zeigt eine durchsichtige Kunststofffolie 10, die aus zwei Teilfolien 10a, b aufgebaut ist. Die Bildmuster 12, 14 sind auf die äusseren Flächen der Teilfolien 10a, b aufgebracht. Eine derartige Anordnung kann beispielsweise so hergestellt werden, dass beide Teilfolien 10a, b zunächst mit je einem Bildmuster 12, 14 bedruckt und die bedruckten Teilfolien nachfolgend durch Kaschieren zusammengefügt werden.

Fig. 4 zeigt eine Aluminiumfolie 18, die mit einem ersten Bildmuster 12 bedruckt ist. Diese bedruckte Aluminiumfolie 18 ist gegen eine mit dem zweiten Bildmuster 14 bedruckte durchsichtige Kunststofffolie 10 kaschiert.

Gemäss Fig. 5 ist eine durchsichtige Kunststofffolie 10 zwischen zwei mit je einem Bildmuster 12, 14 bedruckten durchsichtigen Kunststofffolien 10a, b kaschiert.

Bei dem in Fig. 6 gezeigten Beispiel ist eine durchsichtige Kunststofffolie 10 auf eine Aluminiumfolie 20 mit Hochglanzoberfläche 21 kaschiert. Hierbei ist nur die durchsichtige Kunststofffolie 10 einseitig mit einem Bildmuster 12 bedruckt. Die dreidimensionale Moiré-Interferenz ergibt sich hier aus dem Bildmuster 12 und seinem durch die Hochglanzoberfläche 21 erzeugten Spiegelbild.

Die in Fig. 7 dargestellte Anordnung ist für eine Betrachtung im durchscheinenden Licht geeignet. Sie entspricht der Ausführung von Fig. 2 mit zusätzlichen, beidseits gegen die Materialschicht 10 kaschierten Deckschichten 22, 24, in Form von durchsichtigen Kunststofffilmen.

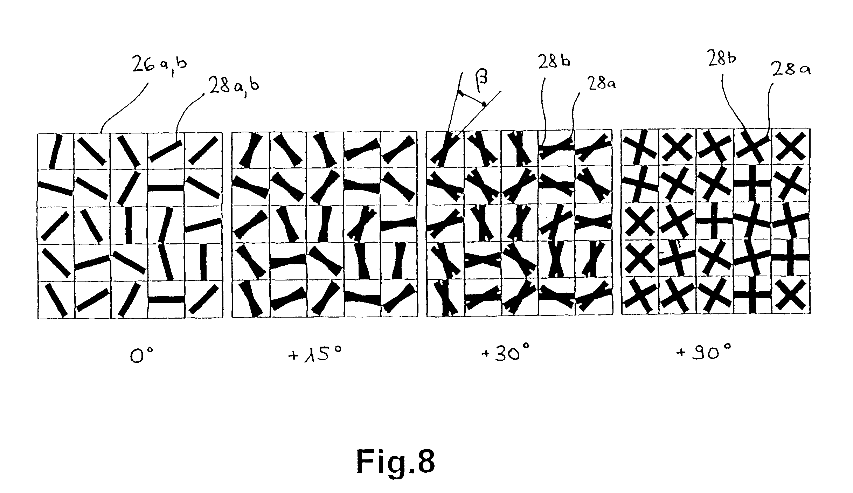

Fig. 8 zeigt die Überlagerung von zwei Bildmustern in Form identischer Grundmatrizes 26a, b mit einzelnen Bildelementen (pixels) in der Form von Strichen 28. Die beiden übereinander angeordneten Grundmatrizes 26a, b unterscheiden sich lediglich dadurch, dass die einzelnen Striche 28b der Grundmatrix 26b gegenüber den entsprechenden Strichen 28a der Grundmatrix 26a um einen Winkel $\beta$ von $0°$ +15°, +30° und + 90° verdreht sind. Durch die unterschiedliche Verdrehung der einzelnen Bildelemente ergeben sich zusätzliche Hell-Dunkel-Kontraste zum bereits vorhandenen Effekt der Änderung der optischen Wahrnehmung des durch die Überlagerung der Bildmuster erzeugten Gesamtbildes bei Änderung des Betrachtungswinkels $\alpha$. Bei Betrachtung der Fig. 8 wird erkennbar, dass die Zunahme des Winkels $\beta$ zwischen den Strichen 28a, b von $0°$ bis $90°$ kontinuierlich zu dunkleren Bildwerten führen. Mit einer geeigneten Software können auf diese Weise Bilder mit unterschiedlichen Graustufen generiert bzw. codiert werden. Die einem Winkel $\beta$ von $0°$ entsprechende Grundmatrix 26a besteht aus einer Anordnung einzelner Striche 26a, deren Winkel relativ zur Matrix alle zufällig generiert wurden.

Die Überlagerung von Grundmatrizes mit versetzt gegeneinander angeordneten Bildelementen kann auch losgelöst von einem grösseren Grundmuster sehr lokal erzeugt werden. Damit lassen sich innerhalb einer übergreifenden Bildes oder Musters weitere untergeordnete Bilder erzeugen.

In der Praxis wird das Bild beispielsweise erzeugt durch einen ersten Druck aus Bildelementen, die zwar zufällig angeordnet sind, deren Ausrichtung jedoch in einer Matrix gespeichert wird. Zur Erzeugung eines Bildes werden nun auf dem darüberliegenden Druck je nach gewünschtem Grauton die Bildelemente um einen gewissen Betrag gegeneinander versetzt angeordnet. Bei möglichst heller Bildstelle sind die Bildelemente nicht, bei möglichst dunkler Stelle maximal gegeneinander versetzt angeordnet. An Stellen ohne Bild wird wiederum ein Zufallsmuster erzeugt. Da die beiden Drucke als voneinander beabstandete Bildmuster vorliegen, ist das erzeugte Bild somit nur unter einem definierten Betrachtungswinkel α wahrnehmbar. Anstelle von Grautönen können bei Verwendung vom Musterbildern mit farbigen Bildelementen auch unterschiedliche Farben erzeugt werden.

Die Erfindung ist nicht auf die gezeigten Ausführungsformen beschränkt, sondern umfasst vielmehr alle Gegenstände mit einem erfindungsgemässen Schichtaufbau in zumindest einem Oberflächenbereich. Insbesondere können weitere Filme oder Folien den Schichtaufbau zu einem beliebigen Verpakkungsmaterial ergänzen, oder der erfindungsgemässe Schichtaufbau kann direkt an einem Produkt angebracht werden.

**Patentansprüche**

1. Gegenstand mit einem zur Erhöhung der Fälschungssicherheit einen optischen Effekt erzeugenden Oberflächenbereich, wobei der Oberflächenbereich mit dem optischen Effekt mindestens zwei durch eine durchsichtige Materialschicht (10) in festem Abstand (d) gehaltene Bildmuster (12, 14) aufweist und sich bei Änderung des Betrachtungswinkels (α) die optische Wahrnehmung des durch die Überlagerung der Bildmuster (12, 14) erzeugten Gesamtbildes ändert, wobei der durch eine Dicke der durchsichtigen Materialschicht (10) im Bereich von 7 bis 200 μm definierte Abstand (d) zwischen den Bildmustern (12, 14) und die Distanz (a) zwischen benachbarten, den Bildmustern (12, 14) zugrundeliegenden Bildelementen (16) so aufeinander abgestimmt sind, dass die Bildmuster Moiré-Interferenzen zeigen.

2. Gegenstand nach Anspruch 1, **dadurch gekennzeichnet, dass** die durchsichtige Materialschicht (10) beidseitig mit einem Bildmuster (12, 14) versehen ist.

3. Gegenstand nach Anspruch 1, **dadurch gekennzeichnet, dass** die durchsichtige Materialschicht (10) aus mindestens zwei Teitschichten (10a, b) aufgebaut ist und die Bildmuster (12, 14) auf unterschiedlichen Teilschichten (10a, b) aufgebracht sind.

4. Gegenstand nach Anspruch 1, **dadurch gekennzeichnet, dass** eines der Bildmuster (12) auf einer undurchsichtigen Folie, insbesondere auf einer Aluminiumfolie (18), aufgebracht ist.

5. Gegenstand nach Anspruch 1, **dadurch gekennzeichnet, dass** die durchsichtige Materialschicht (10) einseitig an eine spiegelnde Schicht grenzt und ein zweites Bildmuster das Spiegelbild eines ersten Bildmusters (12) ist.

6. Gegenstand nach Anspruch 5, **dadurch gekennzeichnet, dass** die spiegelnde Schicht eine Aluminiumfolie (20) mit Hochglanzoberfläche (21) ist.

7. Gegenstand nach einem der Ansprüche 1 bis 6, **dadurch gekennzeichnet, dass** die durchsichtige Materialschicht (10) reflektierend ist, so dass im Bereich des Reflexionswinkels ein Reflexionsbild ausserhalb des Bereiches des Reflexionswinkels eine Moiré-Interferenz beobachtet wird.

8. Gegenstand nach einem der Ansprüche 1 bis 7, **dadurch gekennzeichnet, dass** zumindest ein Bildmuster (12, 14) als Farbendruckmuster aufgebracht ist.

9. Gegenstand nach Anspruch 8, **dadurch gekennzeichnet, dass** zumindest ein Bildmuster (12,14) als ein erst im UV-oder im IR-Licht sichtbares Farbendruckmuster aufgebracht ist.

10. Gegenstand nach einem der Ansprüche 1 bis 9, **dadurch gekennzeichnet, dass** zumindest ein Bildmuster (12,14) in der Form einer Oberflächenstruktur mit höhenversetzten Strukturteilen ausgestaltet ist.

11. Gegenstand nach Anspruch 10, **dadurch gekennzeichnet, dass** zumindest ein Bildmuster (12, 14) als Präge- oder Ätzmuster aufgebracht ist.

12. Gegenstand nach Anspruch 10 oder 11, **dadurch gekennzeichnet, dass** zumindest ein Bildmuster (12,14) kalt- und/oder heissgeprägt ist.

13. Gegenstand nach einem der Ansprüche 1 bis 12, **dadurch gekennzeichnet, dass** die Bildmuster (12,14) als Mikroperforation auf einer undurchsichtigen Folie, insbesondere auf einer Aluminiumfolie, aufgebracht sind.

14. Gegenstand nach Anspruch 13, **dadurch gekennzeichnet, dass** der Durchmesser bzw. die Breite der Perforationen etwa 10 bis 1000 μm, vorzugsweise 50 bis 200 μm, beträgt.

15. Gegenstand nach einem der Ansprüche 1 bis 14, **dadurch gekennzeichnet, dass** Bereiche eines Bildmusters (14) zum anderen Bildmuster (12) insbesondere um die halbe Distanz (a) zwischen benachbarten Bildelementen (16) gegeneinander verschoben sind.

16. Gegenstand nach einem der Ansprüche 1 bis 15, **dadurch gekennzeichnet, dass** die Bildmuster (12,14) Grundmatrizes (26a, b) mit einzelnen Bildelementen (28a, b) umfassen, wobei einander zugehörige Bildelemente verschiedener Grundmatrizes zur Erzeugung lokal unterschiedlicher Hell-Dunkel-Kontraste bzw. Farben versetzt gegeneinander angeordnet sind.

17. Gegenstand nach Anspruch 16, **dadurch gekennzeichnet, dass** die Bildelemente Muster (28a, b) bilden, die durch verschiedene Kombinationen von Überlagerungen definierte Hell-Dunkel-Kontraste bzw. Farben ergeben.

18. Gegenstand nach einem der Ansprüche 1 bis 17, **dadurch gekennzeichnet, dass** die Bildmuster (12,14) so angeordnet sind, dass zumindest ein Teil des optischen Effekts erst nach dem Auflegen eines Filters mit einem Gittermuster, dessen Gitterdimensionen auf die Dimensionen der Bildmuster (12,14) abgestimmt sind, sichtbar wird.

19. Verfahren zur Herstellung eines Gegenstandes, nach Anspruch 1, **dadurch gekennzeichnet, dass** die Bildmuster (12,14) auf verschiedene Teilschichten (10a,b) aufgebracht und die Teilschichten (10a, b) durch Kaschieren zur Materialschicht (10) zusammengefügt werden.

20. Verfahren zur Herstellung eines Gegenstandes nach Anspruch 1, **dadurch gekennzeichnet, dass** eine Kunststoffolie (10) auf beiden Seiten mit den Bildmustern (12, 14) bedruckt wird.

21. Verwendung eines Gegenstandes, nach einem der Ansprüche 1 bis 18 in der Form einer Verpackung, eines Packstoffes, eines Packhilfsmittels, eines Wertpapiers, einer Eintrittskarte oder dgl. Dokumente mit fälschungssicherem und/oder optisch ansprechendem Oberflächenbereich.

**Claims**

1. Object comprising a surface region generating an optical effect in order to improve the tamper-proof properties, the surface region having the optical effect comprising at least two patterns (12, 14) maintained at a fixed distance (d) from one another by a transparent material layer (10) and the optical perception of the entire image generated by the superimposition of the patterns (12, 14) changing when the viewing angle ($\alpha$) is changed, the distance (d) between the patterns (12, 14) defined by a thickness of the transparent material layer (10) in the region of 7 to 200 $\mu$m and the distance (a) between adjacent image elements (16) underlying the patterns (12, 14) being adapted to one another in such a manner that the patterns display moiré interference.

2. Object according to claim 1, **characterised in that** the transparent material layer (10) is provided on both sides with a pattern (12, 14).

3. Object according to claim 1, **characterised in that** the transparent material layer (10) is made up of at least two partial layers (10a, b) and the patterns (12, 14) are applied to different partial layers (10a, b).

4. Object according to claim 1, **characterised in that** one of the patterns (12) is applied to an opaque foil, in particular to an aluminium foil (18).

5. Object according to claim 1, **characterised in that** the transparent material layer (10) is adjacent to a reflecting layer on one side and a second pattern is the mirror image of a first pattern (12).

6. Object according to claim 5, **characterised in that** the reflecting layer is an aluminium foil (20) with a high-gloss surface (21).

7. Object according to one of claims 1 to 6, **characterised in that** the transparent material layer (10) is reflective so that a reflected image is observed in the region of the angle of reflection and moiré interference is observed outside the region of the angle of reflection.

8. Object according to one of claims 1 to 7, **characterised in that** at least one pattern (12, 14) is applied in the form of a colour-printing pattern.

9. Object according to claim 8, **characterised in that** at least one pattern (12, 14) is applied in the form of a colour-printing pattern only visible in UV light or infrared light.

10. Object according to one of claims 1 to 9, **characterised in that** at least one pattern (12, 14) is designed in the form of a surface structure having vertically offset structural parts.

11. Object according to claim 10, **characterised in that** at least one pattern (12, 14) is applied in the form of an embossed or etched pattern.

12. Object according to claim 10 or claim 11, **characterised in that** at least one pattern (12, 14) is cold-embossed pattern and/or hot-embossed.

13. Object according to one of claims 1 to 12, **characterised in that** the patterns (12, 14) are applied in the form of microperforations to an opaque foil, in particular to an aluminium foil.

**14.** Object according to claim 13, **characterised in that** the diameter or the width of the perforations is approximately 10 to 1000 µm, preferably 50 to 200 µm.

**15.** Object according to one of claims 1 to 14, **characterised in that** regions of one pattern (14) are displaced relative to the other pattern (12), in particular by half the distance (a) between adjacent image elements (16).

**16.** Object according to one of claims 1 to 15, **characterised in that** the patterns (12, 14) include basic matrices (26a, b) having individual image elements (28a, b), associated image elements of different basic matrices being arranged in such a manner that they are offset relative to one another in order to generate locally varying light-dark contrasts or colours.

**17.** Object according to claim 16, **characterised in that** the image elements form patterns (28a, b) which generate light-dark contrasts or colours defined by different combinations of superimposition.

**18.** Object according to one of claims 1 to 17, **characterised in that** the patterns (12, 14) are arranged in such a manner that at least part of the optical effect is only visible after the application of a filter having a lattice pattern, the lattice dimensions of which are adapted to the dimensions of the patterns (12, 14).

**19.** Process for the production of an object according to claim 1, **characterised in that** the patterns (12, 14) are applied to different partial layers (10a, b) and the partial layers (10a, b) are joined to the material layer (10) by laminating.

**20.** Process for the production of an object according to claim 1, **characterised in that** the patterns (12, 14) are printed on both sides of a plastic film (10).

**21.** Use of an object according to one of claims 1 to 18 in the form of a package, packaging material, packaging accessory, security paper, admission ticket or similar documents having a tamper-proof and/or optically appealing surface region.

## Revendications

**1.** Objet avec une zone superficielle générant un effet optique en vue de l'accroissement de la sécurité contre une contrefaçon, la zone superficielle avec l'effet optique présentant au moins deux mires (12, 14) maintenues à un écartement fixe (d) par une couche de matériau transparent (10) et, lors de la variation de l'angle d'observation (α), la perception optique de l'image globale générée par la superposition des mires (12, 14) se modifie, l'écartement (d) défini par une épaisseur de la couche de matériau transparent (10) étant de 7 à 200 µm entre les mires (12, 14) et la distance (a) entre des éléments d'image (16) adjacents, constituant les mires (12, 14) sont mutuellement accordés de sorte que les mires présentent des interférences de moire.

**2.** Objet selon la revendication 1, **caractérisé en ce que** la couche de matériau transparent (10) est munie des deux côtés d'une mire (12, 14).

**3.** Objet selon la revendication 1, **caractérisé en ce que** la couche de matériau transparent (10) est constituée d'au moins deux couches partielles (10a, b) et les mires (12, 14) sont appliquées sur des couches partielles différentes (10a, b).

**4.** Objet selon la revendication 1, **caractérisé en ce que** l'une des mires (12) est déposée sur une pellicule opaque, en particulier sur une pellicule d'aluminium (18).

**5.** Objet selon la revendication 1, **caractérisé en ce que** la couche de matériau transparent (10) est adjacente d'un côté à une couche réfléchissante et une seconde mire est l'image réfléchie d'une première mire (12).

**6.** Objet selon la revendication 5, **caractérisé en ce que** la couche réfléchissante est une pellicule d'aluminium (20) à surface (21) hautement brillante.

**7.** Objet selon l'une des revendications 1 à 6, **caractérisé en ce que** la couche de matériau transparent (10) est réfléchissante, de sorte que dans la plage de l'angle de réflexion d'uns image réfléchie à l'extérieur de la plage de l'angle de réflexion est observée une interférence de moire.

**8.** Objet selon l'une des revendications 1 à 7, **caractérisé en ce qu'**au moins une mire (12, 14) est appliquée en tant que motif imprimé en couleur.

**9.** Objet selon la revendication 8, **caractérisé en ce qu'**au moins une mire (12, 14) est appliquée en tant que motif imprimé en couleur visible en lumière UV ou en lumière IR.

**10.** Objet selon l'une des revendications 1 à 9, **caractérisé en ce qu'**au moins une mire (12, 14) est réalisée sous la forme d'une structure superficielle avec des parties de structure décalées en hauteur.

**11.** Objet selon la revendication 10, **caractérisé en ce qu'**au moins une mire (12, 14) est réalisée en tant que motif estampé ou gravé.

**12.** Objet selon la revendication 10 ou 11, **caractérisé en ce qu'**au moins une mire (12, 14) est estampée à froid et/ou à chaud.

**13.** Objet selon l'une des revendications 1 à 12, **caractérisé en ce que** les mires (12, 14) en tant que microperforations sont disposées sur une pellicule opaque, en particulier sur une pellicule d'aluminium.

**14.** Objet selon la revendication 13, **caractérisé en ce que** le diamètre ou la largeur des perforations s'élève à environ 10 à 1000 µm, de préférence 50 à 200 µm.

**15.** Objet selon l'une des revendications 1 à 14, **caractérisé en ce que** les zones d'une mire (14) sont décalées par rapport à l'autre mire (12) en particulier de la demi-distance (a) entre des éléments d'image adjacents (16).

**16.** Objet selon l'une des revendications 1 à 15, **caractérisé en ce que** les mires (12, 14) comportent des matrices fondamentales (26a, b) avec différents éléments d'image (28a, b), des éléments d'image associés à différentes matrices fondamentales sont disposés mutuellement décalés en vue de la génération de contrastes clair-obscur ou couleurs différents locaux.

**17.** Objet selon la revendication 16, **caractérisé en ce que** les éléments d'image (28a, b) forment des mires, formant des contrastes clair-obscur ou couleurs définis par différentes combinaisons de superposition.

**18.** Objet selon l'une des revendications 1 à 17, **caractérisé en ce que** les mires (12, 14) sont disposées de sorte qu'au moins une partie de l'effet optique n'est visible qu'après la pose d'un filtre avec un motif de grille, dont les dimensions sont accordées sur les dimensions des mires (12, 14).

**19.** Procédé de fabrication d'un objet selon la revendication 1, **caractérisé en ce que** les mires (12, 14) sont appliquées sur différentes couches partielles (10a, b) et les couches partielles (10a, b) sont réunies par collage à une couche de matériau (10).

**20.** Procédé de fabrication d'un objet selon la revendication 1, **caractérisé en ce qu'**une pellicule de matière plastique (10) est imprimée des deux côtés avec les mires (12, 14).

**21.** Utilisation d'un objet selon une des revendications 1 à 18 sous la forme d'un emballage, d'un matériau d'emballage, d'un auxiliaire d'emballage, d'un titre, d'une carte d'entrée ou documents analogues avec une zone superficielle contre une falsification et/ou réagissant optiquement.

**Fig.1**

**Fig.2**

**Fig.3**

**Fig.4**

**Fig.5**

**Fig.6**

**Fig.7**

Fig.8